# EUROPÄISCHE PATENTSCHRIFT

(11) **EP 1 437 578 B1**
(45) Veröffentlichungstag und Bekanntmachung des Hinweises auf die Patenterteilung: **14.11.2018**
(21) Anmeldenummer: 03450282.3
(22) Anmeldetag: 18.12.2003
(51) Int. Cl.: F02M 37/00, G01F 9/00, G01F 9/02, G01F 15/02

(54) **Verfahren zur kontinuierlichen Messung eines dynamischen Fluidverbrauchs**
Method for continuous measurement of dynamic fluid consumption
Procédé pour la mesure continue de consommation de fluide dynamique

(30) Priorität: 18.12.2002 AT 85302 U
(43) Veröffentlichungstag der Anmeldung: 14.07.2004
(73) Patentinhaber: AVL List GmbH, 8020 Graz (AT)
(72) Erfinder: Christian, Rudolf Dipl. Ing.,, 8047 Graz (AT); Wiesinger, Michael Dr.,, 8010 Graz (AT); Purkarthofer, Ferdinand Ing.,, 8061 St. Radegund (AT)
(74) Vertreter: Patentanwälte Pinter & Weiss OG

(56) Entgegenhaltungen:
- EP-A- 0 043 283
- EP-A- 1 091 197
- EP-A- 1 113 167
- US-A- 4 612 804
- US-A- 5 284 120
- US-A- 5 708 201

## Beschreibung

Verfahren zur kontinuierlichen Messung eines dynamischen Fluidverbrauchs, insbesonders von flüssigem und gasförmigem Kraftstoff, mittels eines kontinuierlich arbeitenden Durchflußsensors mit variablem Druckabfall, vorzugsweise einem Massenstromsensor, dadurch gekennzeichnet, daß wobei der kontinuierlich arbeitende Durchflußsensor in einer Leitung zwischen einer Abgabestelle, an der das Fluid mit einem bestimmten Druck zur Verfügung gestellt wird, und einem Tank für das Fluid angeordnet wird, wobei eine Pumpe aus dem Tank Fluid zur Abgabestelle fördert und der Druck hinter demstromab des Durchflußsensors durch Veränderung des Vordruckes des Durchflußsensors Sensors auf einen konstanten Wert eingeregelt wird, indem der Vordruck durch variable Aufteilung des Fluidstromes stromauf des Durchflußsensors in einen den Durchflußsensors durchfließenden Teilstrom in einer Leitung und einen Überström-Teilstrom in einer Leitung, geregelt wird , wobei die Leitung stromauf des Durchflußsensors von der Leitung abgezweigt wird und über einen Druckregler oder ein über einen Drucksensor angesteuertes proportional einstellbares Ventil in den Tank für das Fluid rückgeführt wird und der Druckregler oder das proportional einstellbare Ventil vom Druck in der Leitung stromab des Durchflußsensors gesteuert wird , sodass die Größe des den Durchflußsensor durchfließenden Teilstroms gegensinnig der Druckabweichung vom Soll-Wert stromab des Durchflußsensor verändert wird. Ebenso betrifft die Erfindung eine Vorrichtung zur Durchführung des Verfahrens.

Für die Messung des Verbrauchs von Flüssigkeiten, speziell in der Anwendung für den Kraftstoffverbrauch von Motoren auf Prüfständen, sind diskontinuierlich betriebene Systeme auf Basis von Waagen bekannt. Sie weisen den Vorteil offener Systeme auf, nämlich die Eigenschaft, dass der Kraftstoff sowohl vom Meßsystem abgegeben als auch zeitweise und im Fördervolumen begrenzt in das System zurückgeführt werden kann. Dabei wird sowohl die abgegebene als auch die rückgeführte Kraftstoffmenge messtechnisch erfasst und bei der Angabe des Verbrauchs berücksichtigt. Offene Systeme erweisen sich insbesondere bei modernen Einspritzsystemen als vorteilhaft, da diese beim Start des Motors während des Druckaufbaus im Einspritzsystem begrenzt Kraftstoff in das Kraftstoffversorgungssystem - beim Fahrzeug letztlich in den Tank - zurückschieben. Als nachteilig erweisen sich derartige Waagen dadurch, dass sie immer wieder nachgefüllt werden müssen, und dadurch kein kontinuierlicher Messbetrieb möglich ist.

Zur kontinuierlichen Messung des Fluidverbrauchs werden oft Meßgeräte herangezogen, die eine volumetrische Messung des Durchflusses durchführen. Solche Anordnungen sind aus der EP 1 091 197 A2 oder der US 5,284,120 A bekannt. Mittels einer zusätzlichen Dichtemessung wird daraus die verbrauchte Kraftstoffmasse ermittelt, die die eigentlich benötigte Meßgröße darstellt. Eine direkte Messung des Masseverbrauches, die den Nachteil der zusätzlichen Dichtemessung vermeidet, läßt sich derzeit für Flüssigkeiten nur diskontinuierlich mit der Wägemethode sowie kontinuierlich für Gase und Flüssigkeiten mit Coriolis-Sensoren realisieren.

Moderne Verbrennungsmotoren benötigen für einen ordnungsgemäßen Betrieb zumeist definierte und durchflußunabhängige Druckverhältnisse sowohl in der Kraftstoffzuleitung als auch in der gegebenenfalls vorhandenen Kraftstoffrückleitung.

Beispielsweise ist gemäß dem österr. Gebrauchsmuster Nr. 3.350 eine Druckstabilisierungseinrichtung zur Stabilisierung des Vorlaufdrucks des Massestromsensors vorgesehen, um an der Anschlußstelle des Verbrauchers den geforderten geringen und konstanten Druck (von im Allgemeinen wenigen mbar) erzeugen zu können. Dafür muß ja der durchflußabhängige Druckabfall am Massestromsensor (von z.B. bis zu 2 bar) variabel kompensiert werden. Insbesonders müssen hochfrequente, sprunghafte oder pulsartige Entnahmen rasch berücksichtigt werden.

Zur Druckstabilisierung wird daher bei den oben genannten kontinuierlichen Verfahren der Kraftstoffmessung stromabwärts vom eigentlichen Durchflusssensor eine Druckreguliereinrichtung (Druckregler) angebracht, die den durchflussabhängigen Druck am Ausgang des Meßsystems auf einen konstanten Ausgangsdruck abregelt. Ein Beispiel hierfür kann der US 5,708,201 A entnommen werden. Nachteilig bei einem derartigen Aufbau ist, dass konventionelle mechanische Druckregler wie eine "hydraulische Diode" agieren, womit gemeint ist, dass das strömende Medium den Regler nur in eine Richtung, nämlich stromabwärts durchströmen kann. Ein mit einem solchen Druckregler aufgebautes Meßsystem stellt kein offenes System dar. Falls nämlich Kraftstoff von der Einspritzanlage in das Meßsystem rückgeführt werden müsste, oder falls es durch Temperaturanstieg im Kraftstoffkreis bei gestopptem Verbraucher zu einer thermischen Expansion des Kraftstoffes kommt, entsteht, je nach Elastizität der Verrohrung, ein zumeist unzulässig hoher Druckanstieg im Kraftstoffsystem, der Leitungen und Einbauten belastet und allenfalls durch aufwendige Druckausgleichseinrichtungen abgefangen werden muß.

Aufgabe der vorliegenden Erfindung war es, ein Verfahren und eine Vorrichtung anzugeben, die eine kontinuierliche, genaue und auch zeitlich hoch auflösende Verbrauchsmessung mit geregeltem Ausgangsdruck für Fluide mittels eines offenen Systems ermöglichen und also auch eine zumindest kurz andauernde Rückströmung bei gleichzeitiger Messung des Durchflusses zuzulassen.

Zur Lösung dieser Aufgabe ist das erfindungsgemäße Verfahren dadurch gekennzeichnet, dass von der Abgabestelle in die Leitung rückgeschobenes Fluid über den Durchflußsensors und die Leitung in den Tank rückgeführt wird. Damit kann erreicht werden, dass einerseits trotz eines durchflussabhängigen Druckabfalls des kontinuierlich arbeitenden und hochdynamischen Durchflußsensors ein konstanter Druck am Ausgang des Meßsystems zur Verfügung gestellt wird, dass andererseits dabei auch gegebenenfalls eine zeitweilig auftretende Rückströmung des Fluids ermöglicht wird, und dass weiters eine solche ungehindert durch den Durchflusssensor in das System zurückströmende Fluidmenge auch messtechnisch erfasst und als negativer Verbrauch berücksichtigt wird. Damit kann insbesondere bei zeitweilig auftretenden Rückströmungen ein übermäßiger Druckanstieg am Ausgang des Meßsystems vermieden und eine genaue Verbrauchsmessung ermöglicht werden. Durch die Erfassung des Druckes hinter dem Durchflußsensor ist eine unmittelbare Rückkoppelung von Druckabweichungen vom gewünschten bzw. eingestellten Abgabedruck auf das Zuleitungssystem vor dem Sensor möglich, durch welche trotz kontinuierlicher Verbrauchsmessung in weiterer Folge strömungsabhängige Druckänderungen dynamisch ausgeglichen werden können.

Gemäß einer ersten Ausführungsvariante des obigen Verfahrens ist vorgesehen, dass der Druck hinter dem Durchflußsensor ermittelt und als Eingangsgröße einer Regelanordnung für den Vordruck des Sensors aufgegeben wird. Durch diese Variante ist die unmittelbarste Beeinflussung des Vordruckes des Sensors möglich, wobei je nach Wahl der Regelanordnung auf unterschiedlichste Anforderungen eingegangen werden kann.

Der Vordruck wird durch variable Aufteilung des Fluidstromes vor dem Sensor in einen den Sensor durchfließenden Teilstrom und einen Überström-Teilstrom (By-Pass) geregelt, wobei die Größe des den Sensor durchfließenden Teilstroms gegensinnig der Druckabweichung vom Soll-Wert hinter dem Sensor verändert wird. Damit ist eine relativ einfache und funktionssichere Lösung der gestellten Aufgabe sichergestellt, die mit apparativ einfachen Mitteln realisiert werden kann.

Dabei kann alternativ dazu oder auch ersatzweise eine Ausführungsform der Erfindung vorgesehen sein, bei welcher der Vordruck durch die Bemessung des Fluidstromes vor dem Sensor und vor einer allfälligen Aufteilung des Volumsstromes geregelt wird, wobei die Größe des Volumsstroms gegensinnig der Druckabweichung vom Soll-Wert hinter dem Sensor verändert wird. Durch die Anpassung des Fluidstromes allenfalls schon vor einer Aufteilung in Teilströme können einerseits die Einrichtungen für die Aufteilung einfacher ausgeführt sein, und andererseits kann vermieden werden, dass ein relativ großer Volumsstrom rückgeführt werden muß, dessen enthaltene mechanische und thermische Energie, die unter anderem von der beispielsweise ungeregelten und zum Druckaufbau immer auf Maximalleistung laufenden Pumpe laufend eingebracht wird, wieder abgeführt werden muß, um so die Konditionierbedingungen für den Kraftstoff einhalten zu können.

Eine erste Ausführungsform der Erfindung sieht vor, daß der Drucksensor als elektrischer Drucksensor, beispielsweise als Druck/Spannungs- oder Druck/Strom-Wandler, oder z.B. auch als digitaler Drucksensor mit einer elektrischen oder optischen Datenschnittstelle, ausgeführt ist, dessen Ausgang mit einer analogen oder digitalen Regel-Elektronik und/oder -Software verbunden ist. Damit kann in einfacher Weise die Rückkoppelung der Veränderung des Drucks hinter dem Sensor erfolgen, wobei durch entsprechende Kennlinien oder Kennfelder unterschiedliche Rückkoppelungscharakteristiken erzielbar sind.

Wenn bei der zuvor beschriebenen Ausführungsform in weiterer Ausgestaltung der Erfindung noch zwischen dem elektrischen Drucksensor und der Abgabestelle für das Fluid ein Druckspeicher vorgesehen ist, kann in bewährter Weise für hochdynamische Druckänderungen eine zusätzliche Druckstabilisierung erfolgen.

Eine sehr einfache, funktionssichere und sehr unmittelbar wirkende mechanische Vorrichtung kann gemäß einer weiteren erfindungsgemäßen Ausführungsform geschaffen werden, wenn der Drucksensor als mechanischer Druckregler ausgeführt ist, dessen Strömungs-Eingang mit einer vor dem Durchflußsensor abzweigenden Leitung verbunden ist und an dessen Druck-Istwert-Eingang die hinter dem Durchflußsensor abzweigende Leitung angeschlossen ist. Mit einer solchen Ausführung können die bei elektronischen Regeleinrichtungen allenfalls bedeutsamen internen Zeitkonstanten weitgehend vermieden werden, wobei die Unmittelbarkeit der Rückkoppelung im Wesentlichen nur durch die im Druckregler zu bewegenden Massen begrenzt ist. Überdies ist durch das im Druckregler auf der Druck-Istwert-Seite vorhandene Volumen, das meist durch eine in geringem Ausmaß bewegliche Membrane begrenzt ist, eine zusätzliche Druckstabilisierung für hochdynamische Druckänderungen am Ausgang des Meßsystems gegeben.

Der Druckregler ist so in das Meßsystem eingebunden, dass der beim Ausgang des Druckreglers austretende Fluidstrom in den Tank oder in die Konditioniereinrichtung rückgeführt wird.

Die Pumpensteuerung ist zur Regelung der Pumpe in Abhängigkeit vom Druck in der Leitung vorteilhafterweise mit einem elektrischen Drucksensor verbunden, der zwischen dem Durchflußsensor einerseits und der Pumpe oder der Konditioniereinrichtung andererseits vorgesehen wird. Damit wird ermöglicht, dass die Pumpe nicht immer mit der maximal notwendigen Leistung betrieben werden muß. Eine hohe Pumpleistung ist ja bei hohem Verbrauch erforderlich, aber bei einem niedrigen Verbrauch und einem bei Coriolis-Sensoren dementsprechend niedrigen Vordruck vor dem Durchflußsensor wäre es vorteilhaft, weniger Verlustleistung in den Überström-Teilstrom einzubringen. Vorzugsweise wird die Pumpensteuerung oder -regelung derart ausgelegt, dass die Pumpe für eine schnelle Entnahme und damit ein schnelles Anheben des Vordruckes auch schnell hochgefahren wird, während das Herunterfahren der Pumpleistung bei einer Verringerung oder einem völligen Stop der Fluidentnahme vergleichsweise langsam erfolgt, wodurch Schwingungen im System vermieden werden können.

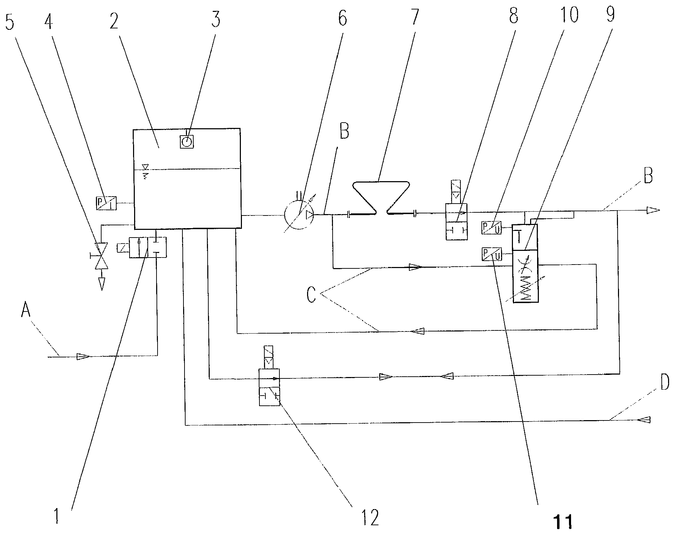

In der nachfolgenden Beschreibung soll die Erfindung anhand eines Ausführungsbeispiels und unter Bezugnahme auf die beigefügte Zeichnung näher erläutert werden. Dabei zeigt die Zeichnungsfigur ein Flussschema einer erfindungsgemäßen Vorrichtung am Beispiel einer kontinuierlichen Verbrauchsmeßanlage für flüssige Kraftstoffe, insbesondere für Motor-Prüfstände.

Über eine Leitung A und ein vorzugsweise elektromagnetisch betätigbares Füllventil 1 wird ein Tank 2, als Reservoir mit der Flüssigkeit, d.h. dem Kraftstoff, versorgt. Der Tank 2 weist weiter einen Schwimmerschalter bzw. Überlauf 3, einen Füllstandssensor 4, sowie einen vorzugsweise manuell betätigbaren Entleerhahn 5 auf.

Vom Tank 2 wird der Kraftstoff mittels einer vorzugsweise regelbaren Kraftstoffpumpe 6 über eine Leitung B dem kontinuierlich arbeitenden Durchflußsensor 7, vorzugsweise einem Coriolis-Sensor, zugeführt. Danach gelangt der Kraftstoff über vorzugsweise ein elektro-pneumatisch betätigbares Abschaltventil 8 in der Leitung B zur Abgabestelle, an welcher der
Motor als Verbraucher (nicht dargestellt) angeschlossen wird und an welcher der Kraftstoff mit einem bestimmten, vorgegebenen Druck zur Verfügung stehen soll.

Hinter dem Abschaltventil 8 zweigt von der Leitung B zum Verbraucher eine Leitung ab, welche zum Regel-Eingang eines vorzugsweise mechanisch-hydraulischen Druckreglers 9 führt. Der Druckregler 9 weist vorteilhafterweise einen Ausgangs-Drucksensor 10 und einen Eingangs-Drucksensor 11 auf. Über den Druckregler 9 wird nun in Abhängigkeit vom Druck in der Leitung B hinter dem Durchflußsensor 7 der Durchfluß durch eine Leitung C geregelt, welche zwischen der Kraftstoffpumpe 6 und dem Durchflußsensor 7 von der Leitung B abzweigt und durch den Druckregler 9 zum Kraftstofftank 2 bzw. der Konditionieranlage zurückführt. Damit ist ein Regelkreis mit Rückkopplung realisiert, in welchem jede Druckveränderung in der Leitung B hinter dem Durchflußsensor 7 gegenüber dem am Druckregler 9 einstellbaren Vorgabewert in eine gleichsinnige Veränderung desjenigen Flüssigkeitsstromes umgesetzt wird, der durch die Leitung C vor dem Durchflußsensor 7 aus der Leitung B abgezweigt und ohne Durchströmung dieses Sensors 7 wieder in den Tank 2 rückgeführt wird. Mit dieser Mengenänderung wird aber auch der Vordruck vor dem Durchflußsensor 7 geregelt, und zwar gegensinnig zur Druckänderung hinter dem Durchflußsensor 7, so dass die Druckabweichung vom eingestellten Wert schnell und sicher ausgeregelt werden kann.

Alternativ könnte anstelle des mechanisch-hydraulischen Druckreglers 9 aber auch ein elektrischer Drucksensor, beispielsweise ein Druck/Spannungs-Wandler, vorgesehen sein, dessen Ausgang mit einer Regelelektronik verbunden ist, die die Aufteilung der Flüssigkeitsströme vor dem Durchflußsensor 7 mittels eines proportional einstellbaren Ventils in Leitung C steuert. In diesem Fall ist vorteilhafterweise zwischen dem elektrischen Drucksensor und der Abgabestelle für die Flüssigkeit ein Druckspeicher in Verbindung mit der Leitung B hinter dem Durchflußsensor 7 vorhanden.

Allenfalls könnte auch noch die Pumpe 6 in Abhängigkeit der Signale des Ausgangs-Drucksensors 10 und des Eingangs-Drucksensors 11, vorzugsweise entsprechend der Druckdifferenz zwischen Eingangs- und Ausgangsdruck, geregelt werden, um bei einem Druckanstieg hinter dem Durchflußsensor 7 bereits weniger Kraftstoff in die Leitung B zu fördern. Auch eine allfällige Regelung der Pumpe 6 in Abhängigkeit vom Druck in der Leitung B vor dem Durchflußsensor 7 ist vorteilhaft.

Sollte es zu einem Rückschieben von Kraftstoff vom Verbraucher in die Leitung B kommen, so kann dieses Flüssigkeitsvolumen über den Durchflußsensor 7 und die Leitung C vom Tank 2 aufgenommen werden.

Eine weitere Leitung 12 kann vorteilhafterweise zwischen der Abzweigung zum Druckregler 9 und der Abgabestelle an den Verbraucher von der Leitung B abzweigen und über ein elektro-pneumatisch schaltbares Entlüftungs-/Bypassventil 12 ebenfalls in den Tank 2 zurückführen. Dadurch kann bei eingeschaltetem Ventil 12 sowie eingeschalteter Pumpe 6 ein geräteinterner Entlüftungsbetrieb realisiert werden. Das Vorsehen einer weiteren Kraftstoff-Rückführleitung D, die eine direkte Verbindung zwischen einer eventuell vorhandenen Rückleitung des Verbrauchers und dem Tank 2 gewährleistet, ermöglicht eine Entlüftung der Kraftstoffleitungen bis zum Verbraucher.

## Patentansprüche

1. Verfahren zur kontinuierlichen Messung eines dynamischen Fluidverbrauchs, insbesonders von flüssigem und gasförmigem Kraftstoff, mittels eines kontinuierlich arbeitenden Durchflußsensors (7) mit variablem Druckabfall, vorzugsweise einem Massenstromsensor, wobei der kontinuierlich arbeitende Durchflußsensor in einer Leitung (B) zwischen einer Abgabestelle, an der das Fluid mit einem bestimmten Druck zur Verfügung gestellt wird, und einem Tank (2) für das Fluid angeordnet wird, wobei eine Pumpe (6) aus dem Tank (2) Fluid zur Abgabestelle fördert und der Druck stromab des Durchflußsensors (7) durch Veränderung des Vordruckes des Durchflußsensors (7) auf einen konstanten Wert eingeregelt wird, indem der Vordruck durch variable Aufteilung des Fluidstromes stromauf des Durchflußsensors (7) in einen den Durchflußsensors (7) durchfließenden Teilstrom in einer Leitung (B) und einen Überström-Teilstrom in einer Leitung (C), geregelt wird, wobei die Leitung (C) stromauf des Durchflußsensors (7) von der Leitung (B) abgezweigt wird und über einen Druckregler (9) oder ein über einen Drucksensor angesteuertes proportional einstellbares Ventil in den Tank (2) für das Fluid rückgeführt wird und der Druckregler (9) oder das proportional einstellbare Ventil vom Druck in der Leitung (B) stromab des Durchflußsensors (7) gesteuert wird, sodass die Größe des den Durchflußsensor (7) durchfließenden Teilstroms gegensinnig der Druckabweichung vom Soll-Wert stromab des Durchflußsensor (7) verändert wird, **dadurch gekennzeichnet, dass** von der Abgabestelle in die Leitung (B) rückgeschobenes Fluid über den Durchflußsensors (7) und die Leitung (C) in den Tank (2) rückgeführt wird.

2. Verfahren nach Anspruch 1, **dadurch gekennzeichnet, dass** der Druck hinter dem Durchflußsensor (7) ermittelt und als Eingangsgröße einer Regelanordnung (9) für den Vordruck des Durchflußsensors (7) aufgegeben wird.

3. Verfahren nach Anspruch 1 oder 2, **dadurch gekennzeichnet, dass** der Vordruck durch die Bemessung des Fluidstromes vor dem Durchflußsensor (7) und vor einer allfälligen Aufteilung des Volumsstromes geregelt wird, wobei die Größe des Volumsstroms gegensinnig der Druckabweichung von einem Soll-Wert hinter dem Durchflußsensor (7) verändert wird.

4. Vorrichtung zur kontinuierlichen Messung eines dynamischen Fluidverbrauchs, insbesonders von flüssigen und gasförmigen Kraftstoff, mittels eines kontinuierlich arbeitenden Durchflußsensors (7), vorzugsweise einen Coriolis-Sensor, wobei der kontinuierlich arbeitende Durchflußsensor in einer Leitung (B) zwischen einer Abgabestelle, zur Abgabe des Fluids mit einem bestimmten Druck, und einem Tank (2) für das Fluid angeordnet ist und eine Pumpe (6) vorgesehen ist, die das Fluid aus dem Tank (2) zur Abgabestelle fördert, und eine Leitung (C) stromauf des Durchflußsensors (7) von der Leitung (B) abzweigt, wobei in der Leitung (C) ein Druckregler (9) oder ein über einen Drucksensor angesteuertes proportional einstellbares Ventil angeordnet ist, wobei der Druckregler (9) oder das proportional einstellbare Ventil vom Druck in der Leitung (B) stromab des Durchflußsensors (7) gesteuert ist, und die Leitung (C) in den Tank (2) für das Fluid rückführt, und wobei der Druckregler (9) oder das proportional einstellbare Ventil den Druck stromab des Durchflußsensors (7) durch Veränderung des Vordruckes des Durchflußsensors (7) durch variable Aufteilung des Fluidstromes in einen den Durchflußsensors (7) durchfließenden Teilstrom in der Leitung (B) und einen Überström-Teilstrom in der Leitung (C) auf einen konstanten Wert regelt und die Größe des den Durchflußsensor (7) durchfließenden Teilstroms gegensinnig der Druckabweichung vom Soll-Wert stromab des Durchflußsensors (7) verändert wird, **dadurch gekennzeichnet, dass** die Leitung (C) von der Abgabestelle in die Leitung (B) rückgeschobenes Fluid über den Durchflußsensors (7) in den Tank (2) rückführt.

5. Vorrichtung nach Anspruch 4, **dadurch gekennzeichnet, dass** ein elektrischer Drucksensor vorgesehen ist, dessen Ausgang mit einer Regelelektronik verbunden ist, die das proportional einstellbare Ventil steuert.

6. Vorrichtung nach Anspruch 5, **dadurch gekennzeichnet, dass** zwischen dem elektrischen Drucksensor und der Abgabestelle für das Fluid ein Druckspeicher vorgesehen ist.

7. Vorrichtung nach Anspruch 4, **dadurch gekennzeichnet, dass** die Leitung (C) an einem Strömungseingang des Druckreglers (9) angeschlossen ist, und die hinter dem Durchflußsensor (7) abzweigende Leitung an einem Druck-Istwert-Eingang des Druckreglers (9) angeschlossen ist.

8. Vorrichtung nach einem der Ansprüche 4 bis 7, **dadurch gekennzeichnet, dass** zwischen dem Durchflußsensor (7) und der Pumpe (6) ein elektrischer Drucksensor vorgesehen und mit der Pumpensteuerung zur Regelung der Pumpe (6) in Abhängigkeit vom Druck in der Leitung (B) verbunden ist.

9. Vorrichtung nach einem Ansprüche 4 bis 8, **dadurch gekennzeichnet, dass** zwischen Durchflußsensor (7) und Abgabestelle ein Abschaltventil (8) angeordnet ist.

## Claims

1. A method for continuous measuring of dynamic fluid consumption, particularly gaseous or liquid motor fuel, by means of a continuous operating flow sensor (7) with variable decrease in pressure, preferably a mass flow sensor, wherein the continuous operating flow sensor is provided in a line (B) between a discharge point, at which the fluid is provided with a certain pressure, and a tank (2) for the fluid, wherein a pump (6) delivers fluid from the tank (2) to the discharge point and the pressure downstream from the flow sensor (7) is adjusted to a constant value by changing the input pressure of the flow sensor (7), in that the input pressure is adjusted by variable separation of the fluid flow upstream from the sensor (7) into a partial flow flowing through the flow sensor (7) and into a bypassing partial flow in a line (C), whereby line (C) branches off from line (B) upstream from the flow sensor (7) and is returned to the tank (2) for the fluid via a pressure controller (9) or via a proportionally adjustable valve that is actuated by a pressure sensor and the pressure controller (9) or the proportionally adjustable valve is controlled by the pressure in line (B) downstream of the flow sensor (7), so that the quantity of the partial flow flowing through the flow sensor (7) is changed inversely relative to the pressure deviation from the set value existing downstream from the flow sensor (7), **characterized in that** fluid that flows back from the discharge point into the line (B) is returned into the tank (2) via the flow sensor (7) and the line (C).

2. A method according to claim 1, **characterized in that** the pressure is detected behind the flow sensor (7) and given as input value to a control arrangement (9) for the input pressure of the sensor.

3. A method according to claim 1 or 2, **characterized in that** the input pressure is adjusted through the change of the volume flow rate of the fluid flow upstream from the flow sensor (7) and before a possible separation of the volume flow wherein the quantity of the volume flow is changed inversely to the pressure deviation from a set value downstream from the sensor (7).

4. A device for continuous measuring of dynamic fluid consumption, particularly gaseous or liquid motor fuel, by means of a continuous operating flow sensor (7), preferably a Coriolis-Sensor, wherein the continuous operating flow sensor is provided in a line (B) between a discharge point, at which the fluid is provided with a certain pressure, and a tank (2) for the fluid and a pump (6) is provided, that delivers fluid from the tank (2) to the discharge point, and a line (C) branches off from line (B) upstream from the flow sensor (7) and is returned to the tank (2), whereby in line (C) a pressure controller (9) or a proportionally adjustable valve that is actuated by a pressure sensor is arranged, wherein the pressure controller (9) or the proportionally adjustable valve is controlled by the pressure in line (B) downstream of the flow sensor (7), and the line (C) is returned to the tank (2) for the fluid, and wherein the pressure controller (9) or the proportionally adjustable valve controls the pressure downstream from the flow sensor (7) to a constant value by changing the input pressure of the flow sensor (7) by variable separation of the fluid flow into a partial flow flowing through the flow sensor (7) in the line (B) and into a bypassing partial flow in the line (C) and the quantity of the partial flow flowing through the flow sensor (7) is changed inversely relative to the pressure deviation from the set value existing downstream from the flow sensor (7), **characterized in that** the line (9) returns fluid that flows back from the discharge point into the line (B) into the tank (2) via the flow sensor (7).

5. A device according to claim 4, **characterized in that** an electric pressure sensor is provided whose output is connected to control electronics that controls the proportionally adjustable valve.

6. A device according to claim 5, **characterized in that** a pressure accumulator is provided between the electric pressure sensor and the discharge point for the fluid.

7. A device according to claim 4, **characterized in that** the line (C) is connected to a flow inlet of the pressure controller (9) and the line branching off downstream from the flow sensor (7) is connected to a pressure sensing port of the pressure regulator (9)r.

8. A device according to one of claims 4 to 7, **characterized in that** an electric pressure sensor is provided between the flow sensor (7) and the pump (6) that is connected with a pump control for controlling the pump (6) in dependence of the pressure in the line (B).

9. A device according to one of claims 4 to 8, **characterized in that** a shutoff valve is arranged between the flow sensor (7) and the discharge point.

## Revendications

1. Procédé de mesure en continu d'une consommation de fluide dynamique, notamment d'un carburant liquide ou sous forme de gaz, au moyen d'un capteur de débit d'écoulement (7) fonctionnant en continu avec une chute de pression variable, de préférence, un capteur de flux massique, où le capteur de débit d'écoulement fonctionnant en continu est disposé dans une conduite (B) entre un point d'alimentation où le fluide est mis à disposition avec une pression déterminée et un réservoir (2) pour le fluide, où une pompe (6) transporte le fluide à partir du réservoir (2) jusqu'au point d'alimentation et la pression en aval du capteur de débit d'écoulement (7) est réglée à une valeur constante par la modification de la pression préalable du capteur de débit d'écoulement (7), en ce que la pression préalable est réglée par une répartition variable du flux de fluide en amont du capteur de débit d'écoulement (7) en un flux partiel traversant le capteur de débit d'écoulement (7) dans une conduite (B) et un flux partiel de déversement dans une conduite (C), où la conduite (C) est dérivée en amont du capteur de débit d'écoulement (7) à partir de la conduite (B) et est ramenée dans le réservoir (2) pour le fluide par le biais d'un régulateur de pression (9) ou par le biais d'une vanne réglable de manière proportionnelle activée par un capteur de pression, et le régulateur de pression (9) ou la vanne réglable de manière proportionnelle est commandé par la pression dans la conduite (B) en aval du capteur de débit d'écoulement (7), de sorte que la valeur du flux partiel traversant le capteur de débit d'écoulement (7) est modifiée dans le sens inverse de la diminution de pression d'une valeur souhaitée en aval du capteur de débit d'écoulement (7), **caractérisé en ce que** le fluide recyclé du point d'alimentation dans la conduite (B) est repoussé dans le réservoir (2) par le biais du capteur de débit d'écoulement (7) et de la conduite (C).

2. Procédé selon la revendication 1, **caractérisé en ce que** la pression est déterminée derrière le capteur de débit d'écoulement (7) et délivrée sous forme de valeur de départ d'un ensemble de régulation (9) pour le pression préalable du capteur de débit d'écoulement (7).

3. Procédé selon la revendication 1 ou 2, **caractérisé en ce que** la pression préalable est réglée par la mesure du flux de fluide avant le capteur de débit d'écoulement (7) et avant une subdivision du flux volumique éventuelle, où la valeur du flux volumique est modifiée dans le sens inverse par rapport à la diminution de pression par rapport à une valeur souhaitée derrière le capteur de débit d'écoulement (7).

4. Dispositif de mesure en continu d'une consommation de fluide dynamique, notamment d'un carburant liquide ou sous forme de gaz, au moyen d'un capteur de débit d'écoulement (7) notamment de carburant liquide ou sous forme de gaz, au moyen d'un capteur de débit d'écoulement (7) fonctionnant en continu, de préférence, un capteur Coriolis, où le capteur de débit d'écoulement fonctionnant en continu est disposé dans une conduite (B) entre un point d'alimentation pour la mise à disposition du fluide avec une pression déterminée, et un réservoir (2) pour le fluide, et une pompe (6) est prévue qui transporte le fluide à partir du réservoir (2) au point d'alimentation, et une conduite (C) est dérivée en amont du capteur de fluide d'écoulement (7) à partir de la conduite (B), où un régulateur de pression (9) ou une vanne réglable de manière proportionnelle commandée par un capteur de pression est disposé dans la conduite (C), où le régulateur de pression (9) ou la vanne réglable de manière proportionnelle en aval du capteur de débit de pression (7) est commandée par la pression dans la conduite (B), et la conduite (C) retourne dans le réservoir (2) pour le fluide, et où le régulateur de pression (9), ou la vanne réglable de manière proportionnelle en aval du capteur de débit d'écoulement (7), est réglé à une valeur constante par une modification de la pression préalable du capteur de débit d'écoulement (7) par une répartition variable du flux de fluide en un flux partiel traversant le capteur de débit d'écoulement (7) dans la conduite (B) et en un flux partiel de déversement dans la conduite (C), et la valeur du flux partiel traversant le capteur de débit d'écoulement (7) est modifiée dans le sens inverse de la diminution de pression d'une valeur souhaitée en aval du capteur de débit d'écoulement (7), **caractérisé en ce que** la conduite (C) retourne le fluide repoussé dans le réservoir (2) par le biais du capteur de débit d'écoulement (7).

5. Dispositif selon la revendication 4, **caractérisé en ce qu'**un capteur de pression électrique est prévu dont la sortie est connectée à une électronique de régulation qui commande la vanne réglable de manière proportionnelle.

6. Dispositif selon la revendication 5, **caractérisé en ce qu'**un accumulateur de pression est prévu entre le capteur de pression électrique et le point d'alimentation pour le fluide.

7. Dispositif selon la revendication 4, **caractérisé en ce que** la conduite (C) est raccordée à une entrée d'écoulement du régulateur de pression (9) et la conduite de dérivation derrière le capteur de débit d'écoulement (7) est raccordée à une entrée de valeur réelle de pression du régulateur de pression (9).

8. Dispositif selon l'une des revendications 4 à 7, **caractérisé en ce qu'**un capteur de pression électrique est prévu entre le capteur de débit d'écoulement (7) et la pompe (6) et est relié avec la commande de pompe pour la régulation de la pompe (6) en fonction de la pression dans la conduite (B).

9. Dispositif selon l'une des revendications 4 à 8, **caractérisé en ce qu'**une vanne d'arrêt (8) est disposée entre le capteur de débit d'écoulement (7) et le point d'alimentation.
